(19) Europäisches Patentamt
European Patent Office
Office européen des brevets

(11) **EP 3 828 597 B1**

(12) **FASCICULE DE BREVET EUROPEEN**

(45) Date de publication et mention
de la délivrance du brevet:
**25.06.2025 Bulletin 2025/26**

(21) Numéro de dépôt: **20210180.4**

(22) Date de dépôt: **27.11.2020**

(51) Classification Internationale des Brevets (IPC):
**G01T 1/169** *(2006.01)* **G01T 7/00** *(2006.01)*

(52) Classification Coopérative des Brevets (CPC):
**G01T 1/169; G01T 7/00**

(54) **PROCÉDÉ D' ESTIMATION D' UN DÉBIT DE DOSE À PARTIR D' UNE IMAGE SPECTRALE**

VERFAHREN ZUR SCHÄTZUNG EINER DOSISRATE AUF DER GRUNDLAGE EINES SPEKTRALBILDS

METHOD FOR ESTIMATING A DOSE FLOW RATE FROM A SPECTRAL IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.11.2019 FR 1913570**

(43) Date de publication de la demande:
**02.06.2021 Bulletin 2021/22**

(73) Titulaire: **Commissariat à l'Energie Atomique et aux Energies Alternatives**
**75015 Paris (FR)**

(72) Inventeur: **MONTEMONT, Guillaume**
**38054 GRENOBLE (FR)**

(74) Mandataire: **INNOV-GROUP**
**209 Avenue Berthelot**
**69007 Lyon (FR)**

(56) Documents cités:
**EP-A1- 3 467 548 WO-A2-2013/186239**

• **REDUS R ET AL: "An Imaging Nuclear Survey System", IEEE TRANSACTIONS ON NUCLEAR SCIENCE, IEEE SERVICE CENTER, NEW YORK, NY, US, vol. 43, no. 3, 1 June 1996 (1996-06-01), pages 1827 - 1831, XP011040505, ISSN: 0018-9499, DOI: 10.1109/23.507230**
• **CHEN SI ET AL: "A new compact gamma camera with super resolution capability and high sensitivity for monitoring sparse radioactive sources in large area", 2013 IEEE NUCLEAR SCIENCE SYMPOSIUM AND MEDICAL IMAGING CONFERENCE (2013 NSS/MIC), IEEE, 27 October 2013 (2013-10-27), pages 1 - 4, XP032601486, DOI: 10.1109/NSSMIC.2013.6829418**

EP 3 828 597 B1

**Description**

**DOMAINE TECHNIQUE**

Le domaine technique de l'invention est la caractérisation de sources irradiantes présentes dans un environnement, notamment dans une installation nucléaire ou une installation comportant des sources irradiantes.

**ART ANTERIEUR**

Les gamma caméras sont des dispositifs permettant de former une image permettant d'établir une cartographie de sources irradiantes dans un environnement donné, et en particulier dans les installations nucléaires. Ce type de dispositif a été développé dans les années 1990, et tend à se répandre dans les installations nucléaires, à des fins de caractérisation radiologique. L'objectif est d'identifier les principales sources irradiantes présentes dans une installation. En effet, les sources d'irradiation ne sont pas réparties de façon homogène. Elles sont souvent concentrées localement, sous la forme de "points chauds", terme usuel dans le domaine de la radioprotection. Une gamma caméra présente l'intérêt d'effectuer une localisation, à distance, de ces points chauds.

Une gamma caméra comporte plusieurs pixels, permettant d'adresser un champ d'observation étendu. Il s'agit d'une alternative à des procédés, relativement anciens, tels que par exemple décrits dans WO2013/186239 selon lesquels on déplace un détecteur spectrométrique non pixelisé le long d'une zone que l'on souhaite caractériser. L'article de REDUS R ET AL "An Imaging Nuclear Survey System" publié dans IEEE TRANSACTIONS ON NUCLEAR SCIENCE, vol. 43, no. 3, 1 juin 1996, pages 1827-1831 décrit une gamma caméra pour la surveillance de sources radioactives éparses dans de vastes zones, les données obtenues étant des données spectrométriques.

Les développements et les usages des gamma caméras ont abondamment été décrits dans la littérature. Depuis le début des années 2000, on assiste au développement de gamma caméras spectrométriques. Ces caméras sont basées sur un imageur pixelisé, chaque pixel permettant d'obtenir un spectre de l'irradiation qu'il détecte. Il s'agit d'un gain considérable dans la localisation des sources irradiantes. En effet, la fonction spectrométrique permet de sélectionner des bandes d'énergies d'intérêt, correspondant à des photons non diffusés, c'est-à-dire des photons n'ayant pas été déviés depuis leur émission par la source d'irradiation. La trajectoire des photons non diffusés est rectiligne. Leur sélection, dans des bandes d'énergies prédéterminées, permet d'éliminer un bruit correspondant aux photons diffusés. Ces derniers ayant été déviés depuis leur émission, ils n'apportent pas d'information utile pour localiser les sources irradiantes. La diffusion est donc une source de bruit, que la spectrométrie permet de limiter de façon significative.

Un autre avantage des gamma caméras spectrométriques est que la connaissance de l'énergie des photons permet une identification des isotopes responsables de l'irradiation. Il s'agit d'une information importante dans le domaine de la radioprotection, ou dans la gestion des déchets radioactifs, ou encore dans le démantèlement des installations nucléaires, ou la caractérisation radiologique post accidentelle.

Après qu'une source d'irradiation a été détectée, la question se pose de savoir le niveau d'irradiation qu'elle génère. Le niveau d'irradiation est généralement exprimé en débit de dose, l'unité usuelle étant le Gy/h, ou le débit d'équivalent de dose, l'unité usuelle étant le Sv/h. Le débit de dose correspond à une quantité d'énergie libérée par unité de volume, tandis que le débit d'équivalent de dose est une unité utilisée à des fins de radioprotection, qui quantifie le dommage biologique occasionné par l'irradiation. Lorsque l'irradiation est causée par des photons, le débit d'équivalent de dose correspond au débit de dose.

L'estimation du débit de dose produit par une source d'irradiation suppose tout d'abord que l'énergie d'émission de la source soit connue. Le recours à une gamma caméra spectrométrique permet d'accéder à cette information.

Par ailleurs, le débit de dose produit par une source d'irradiation varie en fonction de la distance par rapport à la source. Lorsqu'une source d'irradiation est ponctuelle, on sait que l'irradiation évolue en fonction de l'inverse du carré de la distance. Ainsi, à partir d'une estimation du débit de dose en un point, situé à une distance connue d'une source d'irradiation, il est possible d'estimer le débit de dose en tout point du champ d'observation, produit par la source d'irradiation, sous réserve que cette dernière soit considérée comme ponctuelle. Or, lorsqu'on cherche à estimer une irradiation à proximité de la source d'irradiation, l'hypothèse de ponctualité n'est plus forcément vérifiée.

Une difficulté apparaît lorsque les sources d'irradiation sont étendues. En effet, dans de telles situations, il est nécessaire de prendre en compte la distribution spatiale des sources d'irradiation. Il est possible d'effectuer des modèles, à l'aide d'un code de calcul, mais cela prend du temps et reste soumis à la validité du modèle adopté, et en particulier des hypothèses géométriques sur l'étendue et l'homogénéité de la source d'irradiation.

L'inventeur propose un procédé permettant d'effectuer une cartographie de l'irradiation, sous la forme de débits de dose ou de débits d'équivalent de dose, d'une installation comportant des sources irradiantes étendues, et pas forcément homogènes. Par source étendue, on entend une source qui ne peut pas être considérée comme ponctuelle.

**EXPOSE DE L'INVENTION**

Un premier objet de l'invention, selon la revendication 1, est un procédé d'estimation d'un débit de dose, à partir de mesures effectuées par une gamma caméra, la gamma caméra définissant un champ d'observation, le procédé étant tel que :

- le débit de dose estimé provient de sources d'irradiation situées dans le champ d'observation, les sources d'irradiation émettant un rayonnement électromagnétique ionisant ;
- le champ d'observation fait l'objet d'une discrétisation selon un maillage ;
- la gamma caméra comporte des pixels, chaque pixel étant configuré pour détecter le rayonnement électromagnétique ionisant, durant une durée d'acquisition, et pour en former un spectre en énergie, chaque pixel étant associé à au moins un point du maillage, de telle sorte que l'ensemble des pixels permet d'obtenir une distribution spatiale des sources d'irradiation dans le champ d'observation, dans une bande d'énergie ou dans plusieurs bandes d'énergies ;

le procédé comportant les étapes suivantes :

a) acquisition de spectres par les pixels ;
b) prise en compte d'un spectre d'émission, le spectre d'émission étant défini selon une ou plusieurs bandes d'énergie;
c) sélection de points du maillage ;
d) à partir des spectres acquis par chaque pixel, estimation d'une distribution spatiale d'une activité, correspondant au spectre d'émission pris en compte lors de l'étape b), pour les points de maillage sélectionnés ;
e) dans chaque bande d'énergie du spectre d'émission, prise en compte d'une fonction de conversion, préalablement établie, reliant un débit de dose à un flux de photons détecté par la gamma caméra;
f) à partir de la fonction de conversion résultant de l'étape e), et de la distribution spatiale d'activité déterminée lors de l'étape d), estimation d'un débit de dose généré, au niveau de la gamma caméra, par l'ensemble des points sélectionnés lors de l'étape c), le procédé étant tel que: L'étape d) comporte, dans chaque bande d'énergie du spectre d'émission, et pour chaque pixel:

- une estimation, d'un flux de photons détecté par le pixel dans la bande d'énergie, en fonction d'une distribution spatiale de l'activité des points du maillage sélectionnés;
- à partir du spectre détecté par le pixel, détermination, dans la bande d'énergie, du flux de photons détecté par le pixel;

l'étape d) comportant, dans chaque bande d'énergie, une minimisation d'un écart, entre les flux de photons respectivement estimés et mesurés par chaque pixel.

Par flux de photons détecté par la gamma caméra, on entend un flux de photon détecté par un pixel par la gamma caméra. Lors de l'étape f), le débit de dose estimé correspond au débit de dose correspondant au spectre d'émission pris en compte lors de l'étape b).
Par débit de dose, on entend le débit de dose ou le débit d'équivalent de dose.
Selon un mode de réalisation :

- l'étape b) comporte une prise en compte d'un isotope, ou d'un ensemble d'isotopes, potentiellement présent dans le champ d'observation, le spectre d'émission correspondant au spectre d'émission de l'isotope ou au spectre d'émission de l'ensemble d'isotopes ;
- l'étape d) comporte estimation d'une distribution spatiale d'une activité de l'isotope ou de l'ensemble des isotopes dans le champ d'observation.

Le débit de dose estimé lors de l'étape f) correspond alors au débit de dose généré par l'isotope ou l'ensemble d'isotopes pris en compte.
Le procédé peut comporter l'une quelconque des caractéristiques suivantes, prises isolément ou selon les combinaisons techniquement réalisables :

- L'étape b), le spectre d'émission pris en compte comporte une seule ou plusieurs bandes d'énergie.
- L'étape d) comporte une prise en compte d'un modèle spatial, associé à chaque pixel de l'image, le modèle spatial déterminant une probabilité qu'un photon émis par chaque point du maillage soit détecté par le pixel auquel le modèle spatial est associé.

- Lors de l'étape d), la distribution spatiale de l'activité correspond à une répartition de l'activité sur une surface objet.
- La fonction de conversion est estimée par simulation ou la fonction de conversion est estimée en exposant au moins un pixel de la gamma caméra à une source d'irradiation de calibration, de telle sorte que le débit de dose auquel est exposé le pixel est connu.
- La gamma caméra est associée à un télémètre, pour mesurer une distance entre la gamma caméra et la scène observée, et dans lequel le procédé comporte, par exemple suite à l'étape f) :

> g) mesure d'une distance entre la gamma caméra et au moins un point du champ d'observation ;
> h) en utilisant la distance mesurée lors de l'étape g) ainsi que la distribution spatiale d'activité estimée lors de l'étape d), estimation d'un débit de dose généré, par la distribution spatiale de l'activité, en une position différente de la position occupée par la gamma caméra.

- L'étape h) peut comporter une prise en compte du débit de dose estimé lors de l'étape f).
- Le débit de dose estimé lors de l'étape f) est un débit d'équivalent de dose.
- L'étape c) comporte une sélection de tout ou partie des points du maillage du champ d'observation.

Un deuxième objet de l'invention est un dispositif de mesure, selon la revendication 12, comprenant :

- une gamma caméra, comportant des pixels, chaque pixel étant configuré pour détecter un rayonnement électromagnétique ionisant, émis par au moins une source d'irradiation situé dans un champ d'observation de la gamma caméra, durant une durée d'acquisition, et pour en former un spectre en énergie, chaque pixel étant associé à au moins un point du maillage du champ d'observation, de telle sorte que l'ensemble des pixels permet d'obtenir une distribution spatiale de chaque source d'irradiation dans le champ d'observation, dans une bande d'énergie ou dans plusieurs bandes d'énergies ;
- une unité de traitement, configurée pour :

  • recevoir des spectres acquis par plusieurs pixels de la gamma caméra ;
  • mettre en œuvre au moins les étapes b) à f) d'un procédé selon le premier objet de l'invention à partir des spectres acquis.

L'invention sera mieux comprise à la lecture de l'exposé des exemples de réalisation présentés, dans la suite de la description, en lien avec les figures listées ci-dessous.

## FIGURES

La figure 1A schématise une gamma caméra;
La figure 1B schématise des pixels d'une gamma caméra;
La figure 1C schématise une image, obtenue par la gamma caméra, dans une bande d'énergie.
La figure 2 montre les principales étapes d'un procédé selon l'invention.
La figure 3 montre un positionnement des sources d'irradiation sur une surface objet plane.
La figure 4A montre un exemple de fonction de réponse spatiale d'une gamma caméra, comportant un collimateur à masque codé.
La figure 4B montre un exemple de fonction de réponse spatiale d'une gamma caméra Compton.
La figure 4C montre un exemple de matrice de réponse spectrale d'un pixel d'une gamma caméra.
La figure 5 représente une fonction de conversion débit de dose - énergie, en fonction de l'énergie.
Les figures 6A, 6B et 6C sont des exemples de mise en œuvre de l'invention.

## EXPOSE DE MODES DE REALISATION PARTICULIERS

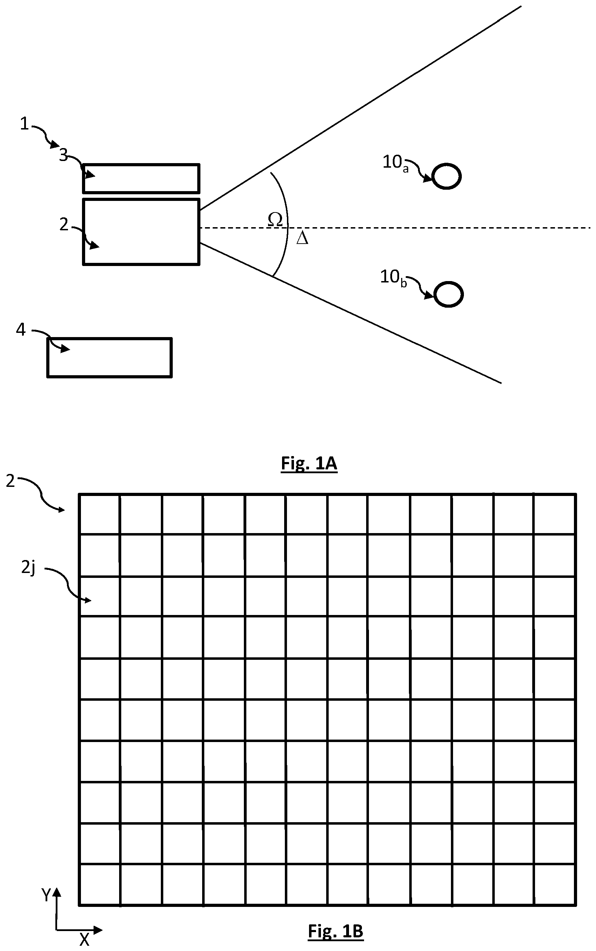

La figure 1A représente un dispositif de mesure 1 permettant une mise en œuvre de l'invention. Le dispositif de mesure comporte un imageur gamma 2, ou gamma caméra. L'imageur gamma est configuré pour détecter des rayons électromagnétiques ionisants, de type X ou gamma, dont l'énergie est généralement comprise entre 10 keV et 10 MeV, dans un champ d'observation $\Omega$. Le champ d'observation s'étend autour d'un axe central $\Delta$. Le dispositif peut comporter un télémètre 3, couplé à la gamma caméra, comme décrit par la suite.

La gamma caméra comporte des pixels $2_j$, chaque pixel correspondant à une zone spatiale élémentaire du champ d'observation. Les pixels sont représentés sur la figure 1B. Lorsque la zone spatiale élémentaire correspondant à un pixel comporte une source irradiante, émettrice de rayonnement X ou gamma, une partie du rayonnement émis par la source atteint le pixel et est détecté par ce dernier. Ainsi, un pixel de l'image gamma comporte d'autant plus de signal que la zone spatiale élémentaire à laquelle il est associé est irradiante, c'est-à-dire émettrice d'un rayonnement X ou gamma. Dans la suite de la description, les exemples sont donnés en lien avec des sources d'irradiation gamma, ce qui correspond au cas d'application le plus fréquent. Il est directement transposable à des sources d'irradiation X.

Généralement, les pixels $2_j$ sont coplanaires et répartis selon une matrice bidimensionnelle, de préférence régulière. La matrice peut par exemple comporter 512 x 512 pixels, voire davantage. Chaque pixel $2_j$ est un détecteur de rayonnement élémentaire.

L'imageur gamma peut être de type gamma caméra Compton, gamma caméra à collimateur sténopé ou gamma caméra à masque codé. Il peut également s'agir, de façon non exhaustive, d'une gamma caméra dont le collimateur comporte des canaux parallèles, ou des canaux convergents, ou des canaux divergents. Aussi, le terme gamma caméra correspond à un imageur présentant un champ d'observation et configuré pour former une image permettant une localisation de sources d'irradiation dans le champ d'irradiation. Quel que soit le type d'imageur gamma, il permet une formation d'une image gamma comportant des pixels, chaque pixel correspondant à une zone spatiale élémentaire du champ d'observation. Le champ d'observation $\Omega$ peut être discrétisé en coordonnées (x, y) selon un maillage. Chaque pixel peut alors être associé à un ou plusieurs points du maillage. Lors de l'utilisation d'une gamma caméra Compton, la correspondance entre pixels et points du maillage varie en fonction des interactions détectées.

De préférence, chaque pixel $2_j$ a une fonction spectrométrique, au sens où il permet une séparation spectrale des rayonnements détectés, durant une durée d'acquisition, en différentes bandes spectrales, ou bandes d'énergie. Lorsqu'on utilise ce type de pixel, il est possible de former différentes images gamma d'un même champ d'observation, à chaque image correspondant une bande d'énergie notée $E_i$. La largeur $dE_i$ de chaque bande d'énergie $E_i$ est variable et dépend des performances des pixels en termes de résolution en énergie. La largeur de chaque bande d'énergie peut être d'ordre de 1 keV, ou de quelques keV, ou de quelques dizaines de keV.

La durée d'acquisition T d'un spectre, par chaque pixel, dépend du flux de photons auxquels le pixel est exposé. Elle peut être de quelques dizaines de ms, ou de quelques secondes, et peut durer plusieurs minutes, voire plusieurs heures. Le spectre gamma acquis par chaque pixel peut alors comporter des pics d'intensité correspondant à des intensités d'émission d'isotopes connus.

On sait qu'à chaque isotope $k$ est associé un spectre d'émission $S_k$. Un tel spectre d'émission correspondant à un histogramme des taux d'émission en fonction de l'énergie. Par taux d'émission, il est entendu un nombre de photons émis correspondant à une activité unitaire de l'isotope. Généralement, l'activité unitaire s'élève à 1 Bq. Ainsi, le spectre d'émission correspond à un nombre de photons émis, dans chaque bande d'énergie $E_i$, pour l'activité unitaire considérée, en l'occurrence 1 Bq.

On peut établir une image gamma en considérant une combinaison de bandes spectrales, qui correspondent au spectre d'émission $S_k$ d'un isotope. La combinaison peut être une somme pondérée. L'image est alors représentative d'une distribution spatiale de l'activité de l'isotope considéré.

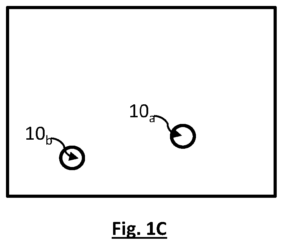

Sur l'exemple schématisé sur la figure 1C, on a représenté deux sources d'irradiation $10_a$, $10_b$, émettant selon une bande spectrale centrée sur 661.66 keV, ce qui correspond à l'isotope $^{137}$Cs. Plus le flux détecté par les pixels, dans cette bande d'énergie, est élevé, plus l'intensité des pixels, représentée sur l'image, est intense.

Dans certains imageurs gamma, en particulier les gamma caméra Compton ou les gamma caméras à masques codés, l'image acquise par l'imageur ne permet pas une représentation directe des sources irradiantes dans le champ d'observation. L'image acquise subit un traitement, prenant en compte une fonction de réponse de la caméra, de façon à permettre d'obtenir une image gamma sur laquelle l'intensité de chaque pixel correspond à un flux de photons détectés, provenant de chaque point du maillage, et cela dans chaque bande d'énergie.

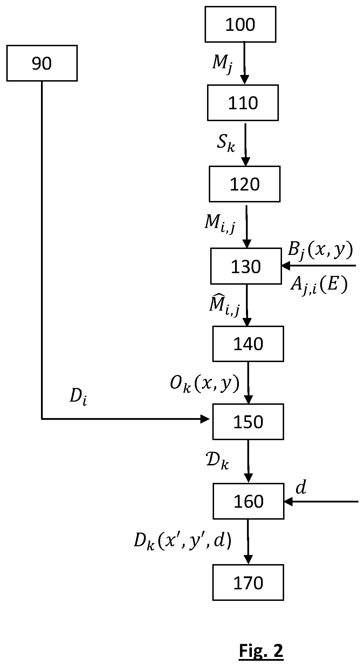

Une unité de traitement 4 reçoit les spectres acquis par chaque pixel $2_j$ de la gamma caméra 2. L'unité de traitement d'images est notamment configurée pour effectuer les opérations décrites en lien avec la figure 2.

Le champ d'observation $\Omega$ fait l'objet d'un maillage, de telle sorte qu'il est discrétisé en des points. Le champ d'observation n'étant pas connu a priori, il peut être assimilé à une surface objet virtuelle $P_O$, sur laquelle chaque point d'observation a des coordonnées (x, y). Un élément important de l'invention est que les points du repère objet sont considérés comme appartenant à une même surface objet $P_o$.

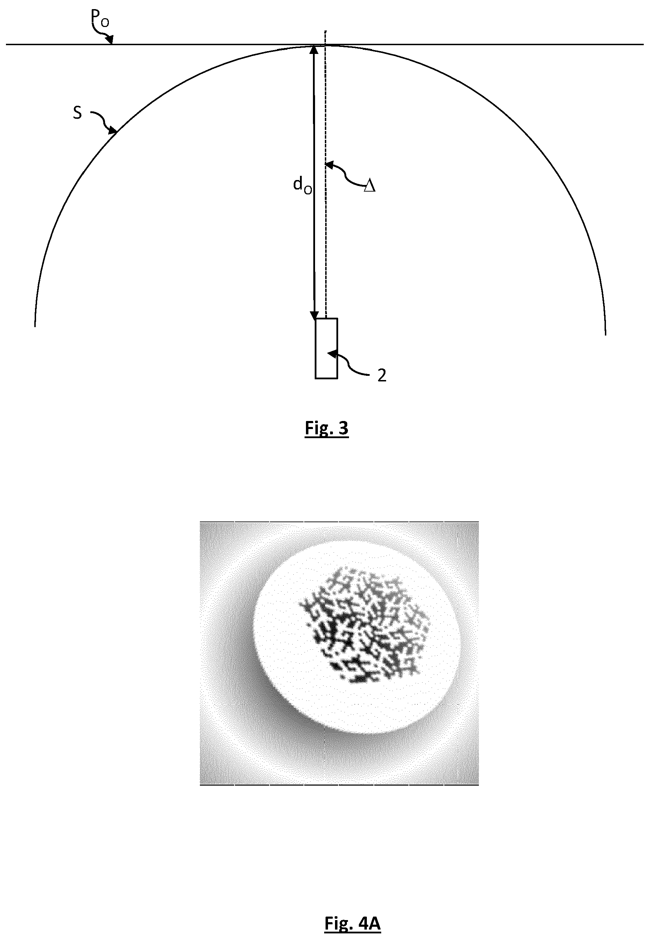

Selon une première approche, simple à mettre en œuvre, la surface objet $P_O$ est une surface plane. Le champ d'observation angulaire $\Omega$ de la gamma caméra, s'étendant autour de l'axe optique $\Delta$, décrit une portion d'une sphère S, représentée sur la figure 3. La surface objet $P_O$ correspond à un plan, tangent à la sphère S, et perpendiculaire à l'axe optique $\Delta$. Les sources irradiantes présentes dans le champ d'observation sont considérées comme coplanaires et appartenant à la surface objet. La distance entre le plan de détection et la surface objet est une distance arbitraire, qui peut ne pas être connue. Lorsque le dispositif dispose d'un télémètre 3, la distance entre la surface objet et la caméra est établie par au moins une mesure de distance effectuée par le télémètre. Le télémètre peut être de type LIDAR, permettant d'obtenir une distance selon une multitude de points du champ d'observation. Le champ d'observation peut alors être assimilé à une surface non plane, définie par les distances mesurées en une multitude de points.

Chaque pixel de la gamma caméra est caractérisé par une fonction de réponse spatiale et une fonction de réponse spectrale.

Une fonction de réponse spatiale $B_j(x, y)$ est établie pour chaque pixel $2_j$. La fonction de réponse spatiale correspond à une probabilité qu'un photon, émis par un point $(x, y)$ du champ d'observation, soit détecté par le pixel $2_j$. Ainsi, pour chaque pixel $2_j$, on dispose d'une fonction de réponse spatiale $B_j(x, y)$ établie pour tout ou partie des points $(x, y)$ du champ d'observation $\Omega$. Le modèle spatial peut être établi de façon analytique ou par modélisations. La fonction de réponse spatiale peut être établie en considérant un isotope $k$, auquel cas elle est notée $B_{j,k}(x, y)$. Elle quantifie une probabilité qu'un photon, émis par un isotope $k$, à un point $(x, y)$ du champ d'observation, soit détecté par le pixel $2_j$

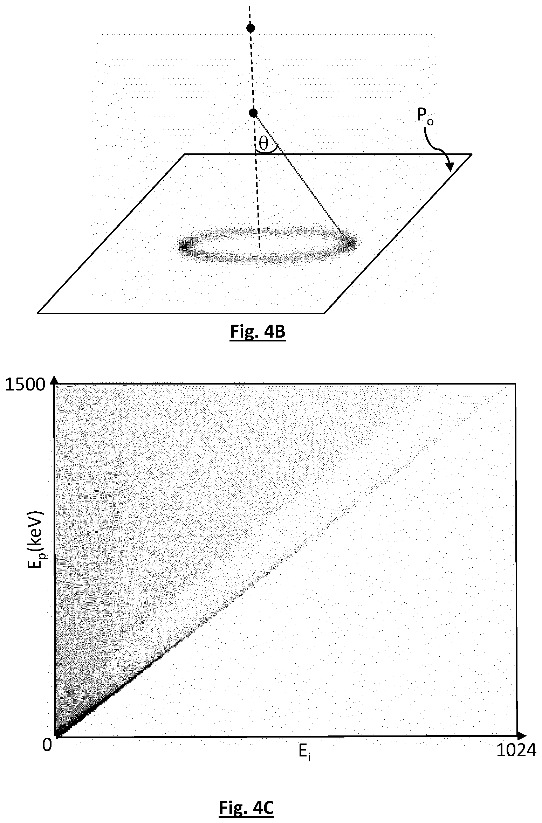

La figure 4A montre un modèle de réponse spatiale lorsque la gamma caméra met en œuvre un masque codé. Le modèle spatial représenté correspond à un champ angulaire de 180° par 180°.La figure 4B montre un modèle de réponse spatiale lorsque la gamma caméra est une gamma caméra Compton. Selon une telle configuration, le modèle de réponse spatiale varie en fonction de la détection des interactions. Dans le modèle représenté sur la figure 4B, la ligne en pointillés représente une direction déterminée par la détection de deux interactions, ces dernières étant matérialisées par les points noirs. Le modèle spatial est défini par un angle de diffusion θ déterminé par la mesure des énergies libérées par chaque interaction. Sur les figures 4A et 4B, plus le niveau de gris est faible, c'est-à-dire sombre, plus la probabilité d'émission d'un photon est importante.

Le modèle spatial peut également être déterminé pour un isotope prédéterminé. Dans ce cas, le modèle spatial prend en compte les énergies d'émission et leurs taux d'embranchement respectifs. Le modèle spatial permet alors d'établir une probabilité de présence de l'isotope.

La figure 4C montre une fonction de réponse spectrale $A_j$ établie pour chaque pixel $2_j$. La fonction de réponse spectrale $A_j$ correspond à une probabilité qu'un photon incident, ayant une énergie $E_p$, soit considéré, suite à la détection par le pixel $2_j$, comme ayant une énergie $E_i$. En d'autres termes, la fonction de réponse spectrale $A_j$ établit un lien entre l'énergie mesurée $E_i$ et l'énergie incidente $E_p$. La fonction de réponse spectrale est représentée, sur la figure 4C, selon une matrice de réponse. La matrice de réponse est de taille P × $I$ où $I$ est le nombre de canaux de chaque spectre formé par le pixel $2_j$ et P est le nombre de canaux selon lesquels le spectre incident au détecteur est discrétisé. $I$ et $P$ sont deux entiers positifs. Chaque terme $A_j(E_p, E_i)$ de cette matrice représente une probabilité qu'un photon incident au détecteur, d'énergie $E_p$, soit considéré par le pixel $2_j$ comme ayant une énergie $E_i$.

Dans la suite, on suppose que la matrice de réponse est identique pour chaque pixel, et elle est notée $A$.

Chaque ligne $A(E_p, . )$ de la matrice, telle que celle représentée sur la figure 4C, correspond à une distribution de probabilité de l'énergie détectée $E_i$ par le détecteur lorsqu'un photon incident au détecteur a une énergie $E_p$. Chaque colonne $A(. , E_i)$ de la matrice, telle que celle représentée sur la figure 4C, correspond à une distribution de probabilité de l'énergie incidente $E_p$ lorsque le photon détecté par le pixel a une énergie $E_i$. Par la suite, chaque colonne $A(. , E_i)$ est désignée $A_i$. Sur la figure 4C, plus le niveau de gris est sombre, plus la probabilité est élevée. Dans le cas d'un pixel $2_j$ agissant comme un détecteur parfait, la matrice $A$ est la matrice identité.

On va à présent décrire, en lien avec la figure 2, les principales étapes d'un procédé d'estimation d'un débit de dose produit par une ou plusieurs sources d'irradiation localisées dans le champ d'observation d'une gamma caméra.

Etape 100 : Acquisition d'une image spectrale $M$.

Au cours de cette étape, on acquiert une image spectrale $M$, durant une durée d'acquisition suffisante pour obtenir un spectre exploitable au niveau des pixels $2_j$ de la caméra. L'image spectrale $M$ est composé de spectres $M_j$, chaque spectre étant acquis par un pixel $2_j$ durant une période d'acquisition. Chaque spectre $M_j$ comporte des flux $M_{i,j}$ détectés à dans différentes bandes d'énergie $E_i$. Le flux $M_{i,j}$ est le nombre de photons détectés par le pixel $2_j$ dans la bande d'énergie $E_i$ par unité de temps.

Etape 110 : Sélection d'une ou plusieurs bandes d'énergie, formant un spectre d'émission $S_k$. Au cours de cette étape, on sélectionne, pour différents pixels $2_j$, une ou plusieurs bandes d'énergie. Cette sélection peut être réalisée a priori. C'est notamment le cas lorsque l'on dispose d'un a priori sur l'isotope, ou les isotopes, susceptibles d'être présents dans le champ d'observation. Il est usuel de se baser sur une liste, comportant une dizaine ou quelques dizaines d'isotopes, émetteurs gamma, potentiellement présents, dont on connaît les spectres d'émission respectifs. Dans certaines installations nucléaires, la liste ne peut comprendre que quelques isotopes, considérés comme majoritaires, voire d'un seul isotope. Par la suite, chaque isotope est représenté par un entier $k$, compris entre 1 et $K$. $K$ est le nombre d'isotopes potentiels. Comme précédemment indiqué, chaque isotope $k$ est associé à un spectre d'émission $S_k$. Le spectre d'émission d'un isotope comporte les énergies d'émission, ces dernières étant discrètes, ainsi que le taux d'embranchement associé à chaque énergie. Le taux d'embranchement correspond à une probabilité d'émission.

Selon une alternative on peut sélectionner plusieurs isotopes, et former un spectre d'émission à partir d'une combinaison du spectre d'émission de chaque isotope. La combinaison est par exemple une somme pondérée. Il est ainsi possible de constituer un spectre d'émission comportant à un mélange prédéfini d'isotopes.

Selon une possibilité, le spectre d'émission ne comporte qu'une seule énergie (par exemple 661.66 keV lorsqu'on s'intéresse à $^{137}$Cs), ou plusieurs bandes d'énergies discrètes (par exemple 1173 keV et 1332 keV lorsqu'on s'intéresse à $^{60}$Co).

Etape 120 : Détermination du flux détecté dans chaque bande d'énergie.

Au cours de cette étape, on détermine, pour chaque pixel $2_j$, le flux $M_{i,j}$ détecté dans chaque bande d'énergie $E_i$ sélectionnée au cours de l'étape 110. Le flux $M_{i,j}$ correspond au nombre de photons détectés dans la bande d'énergie $E_i$ par unité de temps.

Etape 130 : Modélisation du flux détecté

Au cours de cette étape, on modélise un flux $\hat{M}_{i,j}$ qui serait détecté par chaque pixel $2_j$ moyennant une prise en compte d'une activité apparente $O_k(x, y)$ de chaque isotope $k$ dans la surface objet $P_O$. L'activité apparente $O_k(x, y)$ correspond à une activité de l'isotope en considérant que chaque point du champ d'observation appartient à la surface objet $P_O$. Il est rappelé que l'activité d'un isotope correspond à un nombre de désintégrations par seconde. En fonction de l'activité apparente $O_k(x,y)$, le flux $\hat{M}_{i,j}$ détecté par chaque pixel $2_j$, dans la bande d'énergie $E_i$, est tel que :

$$\hat{M}_{i,j} = \sum_k \left[ \left( \int A_i(E) \times S_k(E) dE \right) \times \left( \int B_{j,k}(x,y) \times O_k(x,y) dx dy \right) \right] \quad (1)$$

où :

- $\times$ est un produit terme à terme (produit de Hadamard) ;
- $A_i(E)$ est un vecteur de dimension $(1,I)$, correspondant à une colonne de la matrice A pour le canal d'énergie i ;
- $S_k(E)$ est le spectre d'émission de l'isotope $k$, discrétisé selon $I$ bandes d'énergie ; il prend la forme d'un vecteur dimension $(1,1)$ ;
- $B_{j,k}(x, y)$ est la fonction de réponse spatiale associée au pixel $2_j$ pour un isotope $k$; il s'agit d'une matrice de dimension $(X,Y)$, où X et Y sont les dimensions de la surface d'observation $P_O$ discrétisée en coordonnées (x,y) ;
- $O_k(x, y)$ est une distribution spatiale de l'activité surfacique apparente. Il s'agit d'une matrice de dimension $(X,Y)$ ;

$\hat{M}_{i,j}$ est une grandeur scalaire. On note que l'expression (1) comporte une somme sur chaque isotope $k$ considéré.

La contribution $\hat{m}_{k,i,j}$ de l'isotope $k$ dans la bande d'énergie $E_i$ et le pixel $2_j$ est telle que

$$\hat{m}_{k,i,j} = \left( \int A_i(E) \times S_k(E) dE \right) \times \left( \int B_{jk}(x,y) \times O_k(x,y) dx dy \right) \quad (2)$$

avec

$$\hat{M}_{i,j} = \sum_k \hat{m}_{k,i,j} \quad (3)$$

Etape 140 : Détermination de l'activité apparente

Au cours de l'étape 140, dans chaque bande d'énergie $E_i$, et pour chaque pixel $2_j$, le flux $M_{i,j}$ détecté lors de l'étape 120 est confronté au flux $\hat{M}_{i,j}$ modélisé lors de l'étape 130. Il s'agit de trouver, pour chaque isotope k considéré, la matrice $O_k(x, y)$ minimisant un écart, par exemple un écart quadratique entre $M_{i,j}$ et $\hat{M}_{i,j}$.

Ainsi,

$$O_k(x,y) = \operatorname*{argmin}_{O_k(x,y)} \sum_j \left| \hat{M}_{i,j} - M_{i,j} \right| \quad (4)$$

Selon un mode de réalisation préféré, la minimisation peut être de type Poissonienne, de telle sorte que :

$$O_k(x,y) = \operatorname*{argmin}_{O_k} \sum_{i,j} \left( \hat{M}_{ij} - M_{ij} \ln \hat{M}_{ij} \right) \quad (5)$$

Une telle minimisation peut être effectuée en mettant en œuvre un algorithme de type MLEM (Maximum Likelihood Expectation Maximization), connu de l'homme du métier.

A l'issue de l'étape 140, on dispose d'autant d'images $O_k(x, y)$ que d'isotopes considérés.

Lorsqu'un isotope présente différentes raies d'émission, dans différentes bandes d'énergie, par exemple $^{60}$Co, les images $O_k(x, y)$ correspondent à une distribution spatiale de l'activité de l'isotope, qui prend en compte le spectre d'émission $S_k$ de l'isotope.

Etape 150 : estimation du débit de dose

Au cours de l'étape 150, on estime le débit de dose pour au moins un isotope $k$, voire pour chaque isotope $k$ pour lequel une activité apparente $O_k(x, y)$ significative a été déterminée en au moins un point $(x, y)$ du maillage.

Le débit de dose généré par l'isotope k sur les pixels de la gamma caméra est tel que :

$$\mathcal{D}_k = \sum_i \sum_j \left[ \left( \int A_i(E) \times S_k(E) dE \right) \left( \int B_{j,k}(x,y) \times O_k(x,y) dx dy \right) \right] \times D_i \quad (6)$$

Ce qui peut également être écrit :

$$\mathcal{D}_k = \left[ \sum_i \left( \int A_i(E) \times S_k(E) dE \right) \times D_i \right] \times \left[ \sum_j \left( \int B_{jk}(x,y) \times O_k(x,y) dx dy \right) \right] \quad (6')$$

Le scalaire $D_i$ est la valeur, dans la bande d'énergie $E_i$, d'une fonction de conversion entre le flux de photons et le débit de dose. La fonction de conversion D est établie dans chaque bande d'énergie $E_i$ au cours d'une étape de calibration 90 décrite par la suite.

$\mathcal{D}_k$ est le débit de dose, usuellement exprimé en Gy/h ou le débit d'équivalent de dose, usuellement en Sv/h, correspondant au spectre d'émission pris en compte. On peut effectuer une estimation de différents débits de dose $\mathcal{D}_k$, correspondant respectivement à différents isotopes $k$, ou à différents spectres d'émission $S_k$, et effectuer une somme de chacun de ces débits de dose.

L'étape 150 permet d'obtenir une estimation du débit de dose produit par tout ou partie des isotopes k présents dans le champ d'observation. Cette fonctionnalité permet d'évaluer une répartition des différents isotopes dans le champ d'observation.

Les étapes 110 à 150 peuvent être effectuées dans tout le champ d'observation, ou pour certains points du champ d'observation. Il peut par exemple s'agir de points sélectionnés par un opérateur, sur la base de l'image spectrale acquise lors de l'étape 100. Il peut par exemple s'agir d'une zone particulière du champ d'observation, comportant une source irradiante particulière.

Le procédé peut également comporter les étapes suivantes

Etape 160 : Estimation du débit de dose en fonction de la distance

La gamma caméra peut être associée à un télémètre 3, de façon à estimer une distance entre la gamma caméra et différents points du champ d'observation. Le télémètre peut être de type optique ou acoustique ou électromagnétique. La distance $d_O$ correspond à la distance entre la caméra et la surface objet $P_O$.

Il est alors possible d'estimer, simplement, un débit de dose à différentes distances. Pour cela, on se base sur l'estimation de l'activité apparente $O_k(x, y)$, c'est-à-dire sur la surface objet $P_O$. Si x' et y' représentent les coordonnées d'un point de mesure parallèlement à la surface objet $P_O$, et situé à une distance d de la surface objet, le débit de dose, en ce point, généré par un isotope k, peut être estimé selon l'expression :

$$\mathcal{D}_k(x', y', d) = c_k \times \iint \frac{O_k(x,y)}{d^2 + (x'-x)^2 + (y'-y)^2} dx dy \quad (7)$$

Où $c_k$ est un facteur de prise en compte de la distance décrit par la suite.

Selon le système des coordonnées x' et y', tout point situé sur l'axe optique de la caméra a pour coordonnées (0, 0).

Le facteur de prise en compte de la distance est obtenu par une mesure de la distance $d_O$ entre la gamma caméra et la surface objet $P_O$. On a alors :

$$c_k = \frac{\mathcal{D}_k(0,0,d_o)}{\iint \dfrac{O_k(x,y)}{d_o^2 + (x)^2 + (y)^2} dxdy} \quad (8)$$

Avec $\mathcal{D}_k(0,0,d_o) = \mathcal{D}_k$, ce dernier étant le débit de dose $\mathcal{D}_k$ résultant de l'étape 150 : cf. expressions (6) ou (6').

On comprend que l'obtention d'une activité apparente $O_k(x, y)$, résultant de l'étape 140, permet une estimation d'un débit de dose en différents points du champ d'observation à différentes distances par rapport à au plan objet. Cela suppose toutefois une connaissance d'une distance $d_O$ entre la gamma caméra et la surface objet, de façon à pouvoir calculer le facteur de prise en compte de distance $c_k$.

Dans le mode de réalisation précédemment décrit, on a considéré que la surface objet est une surface plane. Le fait de considérer que les sources irradiantes sont réparties selon une telle surface, permet de s'affranchir d'une reconstruction tridimensionnelle de chaque source irradiante. Il s'agit donc d'une hypothèse simplificatrice, évitant le recours à des moyens de calcul complexes. Selon une variante, on dispose d'une mesure d'une distance entre la caméra et plusieurs points du champ d'observation. Cela peut être obtenu par un capteur de télémétrie effectuant un balayage le long du champ d'observation, par exemple un capteur de type LIDAR. Dans ce cas, la surface objet est alors une surface non plane. Elle est définie en fonction de la distance entre la caméra et les différents points du maillage pour lesquels une distance, par rapport à la caméra a été déterminée.

Le procédé décrit ci-avant suppose une calibration préalable, de façon à déterminer le coefficient de conversion $D_i$ dans plusieurs bandes d'énergie. Cela fait l'objet de l'étape 90.

Etape 90 : détermination de la fonction de conversion débit de dose - flux de photons

Le débit de dose, à l'énergie E, est obtenu à partir d'une fonction de conversion obtenue de façon empirique :

$$D(E) = \beta . E . \left(1 - e^{-\left(\frac{E}{E_0}\right)^{\alpha}}\right) \quad (9)$$

La fonction de conversion $D(E)$ permet d'effectuer une conversion entre un débit de dose et un flux de photons détectés, à l'énergie E, par un pixel de la gamma caméra.

Les paramètres $\beta$, $\alpha$ et $E_0$ peuvent être déterminés par simulation.

- 

$$\beta = 3.5\ 10^{-11}\ (\text{Sv/h})/(\text{keV/s})\ ;$$

- 

$$\alpha = 0.45\ ;$$

- 

$$E_0 = 400\ \text{keV}.$$

Connaissant les paramètres $\beta$, $\alpha$ et $E_0$, l'expression (9) permet d'obtenir une fonction de conversion pour différentes énergies.

La détermination des paramètres de la fonction de conversion $D(E)$ peut également être effectuée de façon expérimentale. Cette étape est mise en œuvre en exposant la gamma caméra à une source de calibration, générant un spectre d'émission connu. La source d'irradiation peut par exemple être monoénergétique, sans que cette condition soit nécessaire. Le débit de dose $\mathcal{D}_i$ généré, au niveau de la caméra, par la source, dans une bande d'énergie $E_i$, est maîtrisé.

On peut montrer que le débit de dose auquel est exposé chaque pixel de la gamma caméra est:

$$\mathcal{D} = \int S(E) \times \frac{D_\theta(E)}{T} dE \ (10)$$

Où $T$ est la durée d'acquisition et $S(E)$ est le spectre acquis par un pixel durant la durée d'acquisition. $\theta$ est l'ensemble paramètres de la fonction de conversion, c'est-à-dire $\beta$, $\alpha$ et $E_0$. Au cours de la calibration, on effectue un nombre Q d'acquisitions de spectres $S_q(E)$, par un ou plusieurs pixels de la gamma caméra. Au cours de chaque acquisition, la caméra est exposée à un débit de dose $\mathcal{D}_q$ qui est connu car la source de calibration est connue et la distance entre la source de calibration et la gamma caméra est également connu. Ainsi, au cours de chaque acquisition, on peut écrire :

$$\mathcal{D}_q = \int S_q(E) \times \frac{D_{\theta,q}(E)}{T_q} dE \ (11)$$

où $T_q$ est la durée d'acquisition de chaque spectre et $D_{\theta,q}(E)$ est la fonction de conversion explicitée par l'expression (9) lors de chaque acquisition.

Les paramètres $\theta$ de la fonction de conversion peuvent être estimées par une minimisation entre $\mathcal{D}_q$ et chaque intégrale $\int S_q(E) \times \frac{D_{\theta,q}(E)}{T_q} dE$, cette dernière étant paramétrée par l'ensemble de paramètres $\theta$. On minimise alors un écart entre le débit de dose auquel est effectivement soumis la caméra, et l'estimation de ce débit de dose à l'aide de la fonction de conversion, selon l'expression (9).

Ainsi,

$$\hat{\theta} = \underset{\theta}{\operatorname{argmin}} \sum_q \left[ \mathcal{D}_q - \int S_q(E) \times \frac{D_{\theta,q}(E)}{T_q} dE \right]^2 \quad (12)$$

$\hat{\theta}$ est l'estimation des paramètres optimaux de la fonction de conversion.

Dans les expressions (6) et (6'), le coefficient $D_i$ est tel que :

$$D_i = D_{\hat{\theta}}(E_i) \quad (13)$$

$\hat{\theta}$ correspond aux paramètres de la fonction de conversion estimés soit par modélisation, soit par calibration expérimentale.

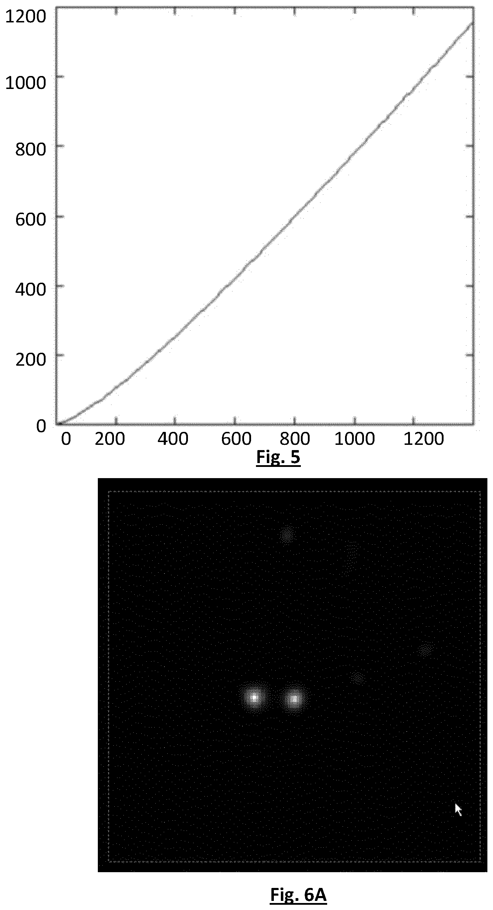

La figure 5 représente un exemple de fonction de conversion. La fonction de conversion peut être établie pour un pixel, et être appliquée à l'ensemble des pixels.

Des essais ont été réalisés en utilisant une gamma caméra comportant des pixels en CdZnTe, en utilisant deux sources ponctuelles de [57]Co. La figure 6A montre une image obtenue, à une distance de 1 mètre. Le débit d'équivalent de dose, généré par chaque source, au contact, s'élevait respectivement à 91.7 $\mu$Sv/h et 81.2 $\mu$Sv/h.

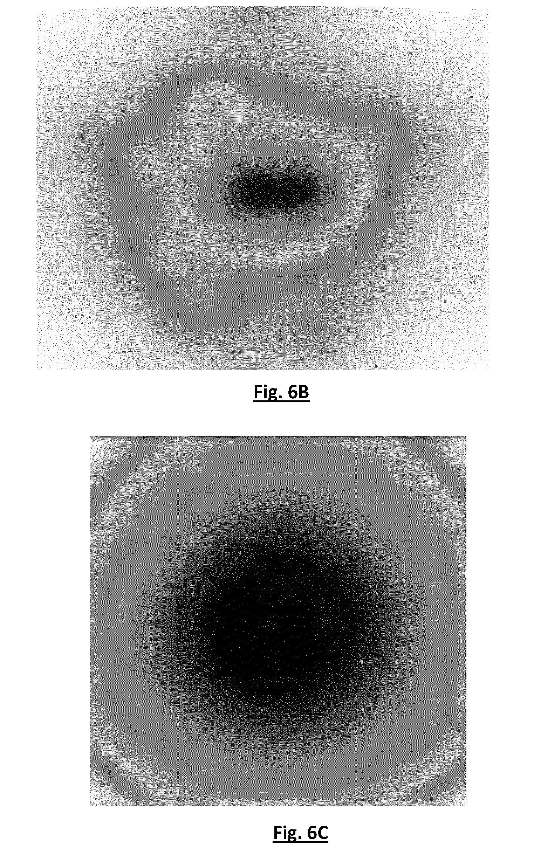

A partir de la mesure représentée sur la figure 6A, on a estimé les débits d'équivalent de dose respectivement à 5 cm (cf. figure 6B) et à 1 m (cf. figure 6C). Les valeurs sont de 50 $\mu$Sv/h et de 0.4 $\mu$Sv/h. Il s'agit des débits de dose générés par les deux sources.

L'invention pourra être mise en œuvre sur différentes installations nucléaires, ou, plus généralement, pour des opérations de recherche et de caractérisation de sources radioactives.

## Revendications

1. Procédé d'estimation d'un débit de dose, à partir de mesures effectuées par une gamma caméra (2), la gamma caméra définissant un champ d'observation ($\Omega$), le procédé étant tel que :

   - le débit de dose estimé provient de sources d'irradiation ($10_a$, $10_b$) situées dans le champ d'observation, les sources d'irradiation émettant un rayonnement électromagnétique ionisant ;
   - le champ d'observation fait l'objet d'une discrétisation selon un maillage ;
   - la gamma caméra (2) comporte des pixels ($2_j$), chaque pixel étant configuré pour détecter le rayonnement électromagnétique ionisant, durant une durée d'acquisition, et pour en former un spectre en énergie, chaque pixel étant associé à au moins un point du maillage, de telle sorte que l'ensemble des pixels permet d'obtenir une position des sources d'irradiation dans le champ d'observation, dans une bande d'énergie ($E_i$) ou dans plusieurs bandes d'énergies ;

le procédé comportant les étapes suivantes :

a) acquisition de spectres ($M_j$) par les pixels ;
b) prise en compte d'un spectre d'émission ($S_k$), le spectre d'émission étant défini selon une ou plusieurs bandes d'énergie ($E_i$);
c) sélection de points (*x, y*) du maillage ;
d) à partir des spectres ($M_j$) acquis par chaque pixel ($2_j$), estimation d'une distribution spatiale d'une activité ($O_k(x, y)$), correspondant au spectre d'émission pris en compte lors de l'étape b), pour les points du maillage sélectionnés ;
e) dans chaque bande d'énergie ($E_i$) du spectre d'émission, prise en compte d'une fonction de conversion ($D_i$), préalablement établie, reliant un débit de dose à un flux de photons détecté par la gamma caméra;
f) à partir de la fonction de conversion ($D_i$) résultant de l'étape e), et de la distribution spatiale d'activité ($O_k(x, y)$) déterminée lors de l'étape d), estimation d'un débit de dose ($\mathcal{D}_k$) généré, au niveau de la gamma caméra, par les points sélectionnés lors de l'étape c) ;

le procédé étant tel que :

- l'étape d) comporte, dans chaque bande d'énergie ($E_i$) du spectre d'émission, et pour chaque pixel ($2_j$):

• une estimation, d'un flux de photons ($\hat{M}_{i,j}$) détecté par le pixel dans la bande d'énergie, en fonction d'une distribution spatiale de l'activité des points du maillage sélectionnés;
• à partir du spectre détecté par le pixel ($M_j$), détermination, dans la bande d'énergie, du flux de photons ($M_{i,j}$) détecté par le pixel ;

l'étape d) comportant, dans chaque bande d'énergie, une minimisation d'un écart, entre les flux de photons respectivement estimés et mesurés par chaque pixel.

2. Procédé selon la revendication 1, dans lequel :

- l'étape b) comporte une prise en compte d'un isotope, ou d'un ensemble d'isotopes, potentiellement présent dans le champ d'observation, le spectre d'émission correspondant au spectre d'émission de l'isotope ou au spectre d'émission de l'ensemble d'isotopes ;
- l'étape d) comporte estimation d'une distribution spatiale d'une activité de l'isotope ou de l'ensemble des isotopes dans le champ d'observation.

3. Procédé selon l'une quelconque des revendications précédentes, dans lequel dans l'étape b), le spectre d'émission pris en compte comporte une seule bande d'énergie.

4. Procédé selon l'une quelconque des revendications précédentes, dans lequel l'étape d) comporte une prise en compte d'un modèle spatial, associé à chaque pixel de la gamma caméra, le modèle spatial déterminant une probabilité qu'un photon émis par chaque point du maillage soit détecté par le pixel auquel le modèle spatial est associé.

5. Procédé selon l'une quelconque des revendications précédentes, dans lequel lors de l'étape d), la distribution spatiale de l'activité correspond à une répartition de l'activité sur une surface objet.

6. Procédé selon l'une quelconque des revendications précédentes, dans lequel la fonction de conversion est estimée par simulation.

7. Procédé selon l'une quelconque des revendications 1 à 5, dans lequel la fonction de conversion est estimée en exposant au moins un pixel de la gamma caméra à une source d'irradiation de calibration, de telle sorte que le débit de dose auquel est exposé le pixel est connu.

8. Procédé selon l'une quelconque des revendications précédentes, dans lequel la gamma caméra est associée à un télémètre (3), pour mesurer une distance entre la gamma caméra et la scène observée, et dans lequel le procédé comporte, suite à l'étape f) :

- g) mesure d'une distance entre la gamma caméra et au moins un point du champ d'observation ;
- h) en utilisant la distance mesurée lors de l'étape g) ainsi que la distribution spatiale d'activité estimée lors de l'étape d), estimation d'un débit de dose ($\mathcal{D}_k(x', y', d)$) généré, par la distribution spatiale de l'activité estimée lors de l'étape d), en une position (($x', y', d$)) différente de la position occupée par la gamma caméra.

9. Procédé selon la revendication 8, dans lequel l'étape h) comporte une prise en compte du débit de dose estimé lors de l'étape f).

10. Procédé selon l'une quelconque des revendications précédentes, dans lequel le débit de dose estimé lors de l'étape f) est un débit d'équivalent de dose.

11. Procédé selon l'une quelconque des revendications précédentes, dans lequel l'étape c) comporte une sélection de tout ou partie des points du maillage du champ d'observation.

12. Dispositif de mesure, comprenant :

- une gamma caméra (2), comportant des pixels, chaque pixel étant configuré pour détecter un rayonnement électromagnétique ionisant, émis par au moins une source d'irradiation situé dans un champ d'observation de la gamma caméra, durant une durée d'acquisition, et pour en former un spectre en énergie, chaque pixel étant associé à au moins un point du maillage du champ d'observation, de telle sorte que l'ensemble des pixels permet d'obtenir une distribution spatiale de chaque source d'irradiation dans le champ d'observation, dans une bande d'énergie ou dans plusieurs bandes d'énergies ;
- une unité de traitement (4), configurée pour :

• recevoir des spectres acquis par plusieurs pixels de la gamma caméra ;
• mettre en œuvre au moins les étapes b) à f) d'un procédé selon l'une quelconque des revendications 1 à 11 à partir des spectres acquis.

**Patentansprüche**

1. Verfahren zur Schätzung einer Dosisrate ausgehend von Messungen, die von einer Gammakamera (2) durchgeführt werden, wobei die Gammakamera einen Betrachtungsbereich ($\Omega$) definiert, wobei das Verfahren dergestalt ist, dass:

- die geschätzte Dosisrate von Strahlungsquellen ($10_a$, $10_b$) stammt, die in dem Betrachtungsbereich gelegen sind, wobei die Strahlungsquellen eine ionisierende elektromagnetische Strahlung emittieren;
- der Betrachtungsbereich Gegenstand einer Diskretisierung gemäß einem Gitter ist;
- die Gammakamera (2) Pixel (2j) umfasst, wobei jedes Pixel dazu ausgestaltet ist, die ionisierende elektromagnetische Strahlung während einer Erfassungsdauer zu detektieren und daraus ein Energiespektrum zu bilden, wobei jedes Pixel mindestens einem Punkt des Gitters zugeordnet ist, so dass die Menge der Pixel es ermöglicht, eine Position der Strahlungsquellen in dem Betrachtungsbereich in einem Energieband ($E_i$) oder in mehreren Energiebändern zu erhalten;
wobei das Verfahren die folgenden Schritte umfasst:

a) Erfassen von Spektren ($M_j$) durch die Pixel;
b) Berücksichtigen eines Emissionsspektrums ($S_k$), wobei das Emissionsspektrum gemäß einem oder mehreren Energiebändern ($E_i$) definiert ist;
c) Auswählen von Punkten $(x, y)$ des Gitters;
d) ausgehend von den Spektren ($M_j$), die von jedem Pixel ($2_j$) erfasst werden, Schätzen einer räumlichen Verteilung einer Aktivität ($O_k(x, y)$), entsprechend dem beim Schritt b) berücksichtigten Emissionsspektrum, für die auswählten Punkte des Gitters;

e) in jedem Energieband ($E_i$) des Emissionsspektrums, Berücksichtigen einer zuvor erstellten Konversionsfunktion ($D_i$), die eine Dosisrate mit einem von der Gammakamera detektierten Photonenstrom verknüpft;
f) ausgehend von der Konversionsfunktion ($D_i$), die aus dem Schritt e) resultiert, und der räumlichen Aktivitätsverteilung ($O_k(x, y)$), die beim Schritt d) bestimmt wurde, Schätzen einer Dosisrate ($D_k$), die an der Gammakamera von den beim Schritt c) ausgewählten Punkten erzeugt wird;

wobei das Verfahren dergestalt ist, dass:

• der Schritt d) in jedem Energieband ($E_i$) des Emissionsspektrums und für jedes Pixel ($2_j$) umfasst:
• ein Schätzen eines Photonenstroms ($\hat{M}_{i,j}$), der von dem Pixel in dem Energieband detektiert wird, in Abhängigkeit von einer räumlichen Verteilung der Aktivität der ausgewählten Punkte des Gitters;
• ausgehend von dem von dem Pixel ($M_j$) detektierten Spektrum, Bestimmen, in dem Energieband, des von dem Pixel detektierten Photonenstroms ($M_{i,j}$);

wobei der Schritt d), in jedem Energieband, eine Minimierung einer Abweichung zwischen den von jedem Pixel geschätzten beziehungsweise gemessenen Photonenströmen umfasst.

2. Verfahren nach Anspruch 1, wobei:

- der Schritt b) ein Berücksichtigen eines Isotops oder einer Menge von Isotopen umfasst, die potentiell in dem Betrachtungsbereich vorhanden sind, wobei das Emissionsspektrum dem Emissionsspektrum des Isotops oder dem Emissionsspektrum der Menge von Isotopen entspricht;
- der Schritt d) das Schätzen einer räumlichen Verteilung einer Aktivität des Isotops oder der Menge der Isotope in dem Betrachtungsbereich umfasst.

3. Verfahren nach einem der vorhergehenden Ansprüche, wobei beim Schritt b) das berücksichtigte Emissionsspektrum ein einziges Energieband umfasst.

4. Verfahren nach einem der vorhergehenden Ansprüche, wobei der Schritt d) ein Berücksichtigen eines räumlichen Modells umfasst, das jedem Pixel der Gammakamera zugeordnet ist, wobei das räumliche Modell eine Wahrscheinlichkeit bestimmt, dass ein von jedem Punkt des Gitters emittiertes Photon von dem Pixel, dem das räumliche Modell zugeordnet ist, detektiert wird.

5. Verfahren nach einem der vorhergehenden Ansprüche, wobei beim Schritt d) die räumliche Verteilung der Aktivität einer Aufteilung der Aktivität auf einer Objektfläche entspricht.

6. Verfahren nach einem der vorhergehenden Ansprüche, wobei die Konversionsfunktion durch Simulation geschätzt wird.

7. Verfahren nach einem der Ansprüche 1 bis 5, wobei die Konversionsfunktion geschätzt wird, indem mindestens ein Pixel der Gammakamera einer Kalibrierungsstrahlungsquelle ausgesetzt wird, so dass die Dosisrate, der das Pixel ausgesetzt ist, bekannt ist.

8. Verfahren nach einem der vorhergehenden Ansprüche, wobei die Gammakamera einem Telemeter (3) zugeordnet ist, um eine Entfernung zwischen der Gammakamera und der betrachteten Szene zu messen, und wobei das Verfahren, nach dem Schritt f), umfasst:

- g) Messen einer Entfernung zwischen der Gammakamera und mindestens einem Punkt des Betrachtungsbereichs;
- h) unter Verwendung der beim Schritt g) gemessenen Entfernung sowie der beim Schritt d) geschätzten räumlichen Aktivitätsverteilung, Schätzen einer Dosisrate ($D_k(x', y', d)$), die, durch die beim Schritt d) geschätzte räumliche Verteilung der Aktivität, an einer Position (($x', y', d$)) erzeugt wird, die verschieden von der von der Gammakamera eingenommenen Position ist.

9. Verfahren nach Anspruch 8, wobei der Schritt h) ein Berücksichtigen der beim Schritt f) geschätzten Dosisrate umfasst.

10. Verfahren nach einem der vorhergehenden Ansprüche, wobei die beim Schritt f) geschätzte Dosisrate eine Dosisäquivalentrate ist.

**11.** Verfahren nach einem der vorhergehenden Ansprüche, wobei der Schritt c) ein Auswählen aller oder eines Teils der Punkte des Gitters des Betrachtungsbereichs umfasst.

**12.** Messvorrichtung, aufweisend:

- eine Gammakamera (2), die Pixel umfasst, wobei jedes Pixel dazu ausgestaltet ist, eine ionisierende elektromagnetische Strahlung, die von mindestens einer in einem Betrachtungsbereich der Gammakamera gelegenen Strahlungsquelle emittiert wird, während einer Erfassungsdauer zu detektieren und daraus ein Energiespektrum zu bilden, wobei jedes Pixel mindestens einem Punkt des Gitters des Betrachtungsbereichs zugeordnet ist, so dass die Menge der Pixel es ermöglicht, eine räumliche Verteilung jeder Strahlungsquellen in dem Betrachtungsbereich in einem Energieband oder in mehreren Energiebändern zu erhalten;
- eine Verarbeitungseinheit (4), die dazu ausgestaltet ist:

  • Spektren zu empfangen, die von mehreren Pixeln der Gammakamera erfasst werden;
  • mindestens die Schritte b) bis f) eines Verfahrens nach einem der Ansprüche 1 bis 11 ausgehend von den erfassten Spektren durchzuführen.

**Claims**

**1.** A method for estimating a dose rate, on the basis of measurements taken by a gamma camera (2), the gamma camera defining an observation field ($\Omega$), the method being such that:

- the estimated dose rate originates from irradiating sources ($10_a$, $10_b$) located in the observation field, the irradiating sources emitting ionizing electromagnetic radiation;
- the observation field is discretized into a mesh;
- the gamma camera (2) comprises pixels ($2_j$), each pixel being configured to detect the ionizing electromagnetic radiation, during an acquisition time, and to form an energy spectrum therefrom, each pixel being associated with at least one point of the mesh, such that together the pixels allow a position of the irradiating sources in the observation field to be obtained in one energy band ($E_i$) or in a plurality of energy bands);

the method comprising the following steps:

a) acquiring spectra ($M_j$) with the pixels;
b) taking into account an emission spectrum ($S_k$), the emission spectrum being defined in one or more energy bands ($E_i$);
c) selecting points (x,y) of the mesh;
d) on the basis of the spectra ($M_j$) acquired by each pixel ($2_j$), estimating a spatial distribution of an activity ($O_k$ (x,y)), corresponding to the emission spectrum taken into account in step b), for the selected points of the mesh;
e) in each energy band ($E_i$) of the emission spectrum, taking into account a preestablished conversion function ($D_i$) relating a dose rate to a photon flux detected by the gamma camera;
f) on the basis of the conversion function ($D_i$) resulting from step e), and of the spatial distribution of activity ($O_k$ (x, y)) determined in step d), estimating a dose rate ($\mathcal{D}_k$) generated, at the gamma camera, by the points selected in step c);

wherein step d) comprises, in each energy band ($E_i$) of the emission spectrum, and for each pixel:

- estimating a photon flux ($\hat{M}$) detected by the pixel in the energy band, depending on a spatial distribution of the activity of the selected points of the mesh;
- on the basis of the spectrum detected by the pixel ($M_j$), determining, in the energy band, the photon flux ($M_{i,j}$) detected by the pixel;

step d) comprising, in each energy band, and for each pixel, minimizing a discrepancy between the estimated photon flux and the measured photon flux.
g)

**2.** The method as claimed in claim 1, wherein:

- step b) takes into account an isotope, or a set of isotopes, potentially present in the observation field, the emission spectrum corresponding to the emission spectrum of the isotope or to the emission spectrum of the set of isotopes;
- step d) comprises estimating a spatial distribution of an activity of the isotope or of the set of isotopes in the observation field.

**3.** The method as claimed in any one of the preceding claims, wherein, in step b), the emission spectrum taken into account comprises a single energy band.

**4.** The method as claimed in any one of the preceding claims, wherein step d) takes into account a spatial model associated with each pixel of the gamma camera, the spatial model defining a probability that a photon emitted by each point of the mesh is detected by the pixel with which the spatial model is associated.

**5.** The method as claimed in any one of the preceding claims, wherein, in step d), the spatial distribution of the activity corresponds to a distribution of the activity over an object surface.

**6.** The method as claimed in any one of the preceding claims, wherein the conversion function is estimated by simulation.

**7.** The method as claimed in any one of claims 1 to 5, wherein the conversion function is estimated by exposing at least one pixel of the gamma camera to a calibration irradiating source, such that the dose rate to which the pixel is exposed is known.

**8.** The method as claimed in any one of the preceding claims, wherein the gamma camera is associated with a rangefinder (3), for measuring a distance between the gamma camera and the observed scene, and wherein the method comprises, following step f):

- g) measuring a distance between the gamma camera and at least one point of the observation field;
- h) using the distance measured in step g) and the spatial distribution of activity estimated in step d), estimating a dose rate ($\mathcal{D}_k(x',y',d)$) generated, by the spatial distribution of the activity estimated in step d), in a position different from the position (($x'$, $y'$, $d$)) occupied by the gamma camera.

**9.** The method as claimed in claim 8, wherein step h) takes into account the dose rate estimated in step f).

**10.** The method as claimed in any one of the preceding claims, wherein the base rate estimated in step f) is an equivalent dose rate.

**11.** The method as claimed in any one of the preceding claims, wherein step c) comprises selecting all or some of the points of the mesh of the observation field.

**12.** A measuring device, comprising:

- a gamma camera (2) comprising pixels, each pixel being configured to detect ionizing electromagnetic radiation, emitted by at least one irradiating source located in an observation field of the gamma camera, during an acquisition time, and to form an energy spectrum therefrom, each pixel being associated with at least one point of the mesh of the observation field, such that together the pixels allow a spatial distribution of each irradiating source in the observation field to be obtained in one energy band or in a plurality of energy bands;
- a processing unit (4), configured to:

  • receive spectra acquired by a plurality of pixels of the gamma camera;
  • implement at least steps b) to f) of a method as claimed in any one of claims 1 to 11 on the basis of the acquired spectra.

**Fig. 1A**

**Fig. 1B**

**Fig. 1C**

**Fig. 2**

**Fig. 3**

**Fig. 4A**

**Fig. 4B**

**Fig. 4C**

**Fig. 5**

**Fig. 6A**

Fig. 6B

Fig. 6C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013186239 A

**Littérature non-brevet citée dans la description**

- **REDUS R et al.** An Imaging Nuclear Survey System. *IEEE TRANSACTIONS ON NUCLEAR SCIENCE*, 01 June 1996, vol. 43 (3), 1827-1831